Europäisches Patentamt

European Patent Office

Office européen des brevets

(11) Publication number: **0 234 902 B1**

(12) **EUROPEAN PATENT SPECIFICATION**

(45) Date of publication of patent specification: **06.05.92**   (51) Int. Cl.⁵: **C08L 53/00**, C08L 67/06

(21) Application number: **87301544.0**

(22) Date of filing: **23.02.87**

The file contains technical information submitted after the application was filed and not included in this specification

(54) **Hardenable unsaturated polyester resin compositions.**

(30) Priority: **22.02.86 JP 37958/86**
**23.06.86 JP 146675/86**
**25.06.86 JP 148396/86**

(43) Date of publication of application:
**02.09.87 Bulletin  87/36**

(45) Publication of the grant of the patent:
**06.05.92 Bulletin  92/19**

(84) Designated Contracting States:
**DE FR GB IT SE**

(56) References cited:
EP-A- 0 136 572
US-A- 4 287 313

**PATENT ABSTRACTS OF JAPAN, vol. 10, no. 166 (C-353)[2222], 13th June 1986**

(73) Proprietor: **Takemoto Yushi Kabushiki Kaisha**
**2-5, Minato-machi**
**Gamagouri-shi Aichi-ken(JP)**

(72) Inventor: **Takayama, Yuji**
**2-1 Aza-Higashiura Kitayama-cho**
**Toyohashi-shi Aichi-ken(JP)**
Inventor: **Kinoshita, Mitsuo**
**5-8 Nishikata Agehama Mito-cho**
**hoi-gun Aichi-ken(JP)**
Inventor: **Imamura, Shigeru**
**4-68-12 Mori, Toyokawa-shi**
**Aichi-ken(JP)**
Inventor: **Matsueda, Hirokazu**
**4-3-8 Nishiodakano**
**Toyohashi-shi, Aichi-ken(JP)**

(74) Representative: **Clifford, Frederick Alan et al**
**MARKS & CLERK 57/60 Lincoln's Inn Fields**
**London WC2A 3LS(GB)**

Rank Xerox (UK) Business Services
(3.08/2.18/2.0)

## Description

This invention relates to hardenable unsaturated polyester resin compositions.

Hardenable unsaturated polyester resin compositions are widely used not only as sheet molding compounds (SMC) and bulk molding compounds (BMC) but also for wet molding methods such as the so-called matched die method as well as the RIM method which is a method of injecting resin.

Thermosetting unsaturated polyester resins are known to have large molding shrinkage as they harden at the time of molding. In order to improve dimensional accuracy, and other physical characteristics such as impact strength, of the molded products, it has been common practice to add thermoplastic high-molecular-weight compounds to such unsaturated thermosetting polyester compounds. If however the two types of compounds are simply mixed together, the surface quality of the molded products becomes extremely poor and desired improvement in reducing shrinkage and increasing impact strength can be attained only with difficulty. Moreover, such mixed compositions have poor workability in the molding processes because they generally do not have sufficient compatibility and/or dispersibility.

According to another widely used conventional method, carboxyl groups are introduced into the molecules of the high-molecular-weight compounds to be added to thermosetting unsaturated polyester resins in such a manner these carboxyl groups become linked with the free end-carboxyl groups of the thermosetting unsatured polyester resins by means of an oxide or hydroxide of an alkaline earth metal, such as magnesium oxide. Some of the desired effects are observed if one uses, as the high-molecular-weight compound to be added, a copolymer of methacrylic acid or acrylic acid with methyl methacrylate, vinyl acetate or styrene. The eventual linked compositions, however, give no improvement in the physical characteristics, as mentioned above, in the molded products.

To improve the impact strength of molded products diene-type polymers may be contemplated as the high-molecular-weight compounds to be added. However, if such compounds are used for this purpose, lustre spots become conspicuous on the surface of the molded products obtained. Such products are also inferior in other physical characteristics, and show no advantageous effects if carboxyl groups are introduced into the diene-type polymers. Although diene-type polymers with carboxyl groups in them are soluble in styrene monomer, which is a monomer component used for hardenable unsaturated polyester resin compositions, the solution separates into layers extremely quickly if an $\alpha$, $\beta$-ethylene-type unsaturated polyester or the like is also present. This is probably because compatibility and/or dispersibility is so poor between diene-type polymers with carboxyl groups and thermosetting unsaturated polyester resins that, even if magnesium oxide or the like is added to link the carboxyl groups, a large proportion of the diene-type polymer becomes separated before combination by much salification, thereby preventing improvement of the physical characteristics of the final molded products.

In order to provide compatibility and dispersibility with thermosetting unsaturated polyester resins, compositions containing block copolymers based on a styrene-type polymer have been considered as additives (Japanese Patent Publications Tokkai 53-74592 and 60-99158). Although these polymers do succeed to some extent in improving compatibility and dispersibility, the molded products obtained are still of low performance in respect of molding shrinkage and of low impact strength, because the block copolymers based on styrene-type polymers are basically lacking in toughness.

Block terpolymers derived from conjugated diene, monovinylarene and $\epsilon$-caprolactone have been considered as additives (US-A-4287313).

Molding products obtained from unsaturated polyester resin compositions containing these block terpolymers have however low molding shrinkage and good surface luster, but have undesired low mechanical strength at elevated temperature.

The present invention sets out to provide hardenable unsaturated polyester resin compositions which have adequate internal compatibility and/or dispersibility and improved workability in molding processes, and which are capable of providing improved physical characteristics such as good surface appearance, low molding shrinkage and good impact strength to the molded products.

The present invention is based on the discovery that these objectives are served by causing the thermosetting unsaturated polyester resins to contain block copolymers having both polyester parts and a liquid rubber compound part as constituent segments thereof, wherein said block copolymer is formed by the ultimate condensation of carboxyl group or hydroxyl groups in said liquid rubber compound with at least one organic dicarboxylic anhydride and at least one 1,2-epoxide in the presence of a catralyst.

The present invention consists in a hardenable unsaturated polyester resin composition comprising, together with the unsaturated polyester, at least one block copolymer having both polyester parts and a liquid rubber compound part as constitutent segments thereof, wherein said block copolymer is formed by the alternate condensation of carboxyl groups or hydroxyl groups in said liquid rubber compound with at least one organic dicarboxylic anhydride and at least one 1,2-epoxide in the presence of a catalyst.

The block copolymers used in the present invention have as their constituent segments both polyester parts and a liquid rubber part.

The present invention, therefore, is not limited by any method of production of a liquid rubber compound or by its specific structure. For example, carboxyl or hydroxyl groups in a liquid rubber compound may be either inside or at the end of a chain. They may be connected to a chain either directly or indirectly through any groups of atoms. As for the liquid rubber compound which forms a segment, its stereoisomerism and structural isomerism according to the method of polymerization such as group polymerisation, ion polymerisation and living polymerisation does not limit the scope of the present invention.

Thus, examples of monomer diene compounds forming liquid rubber compounds include butadiene, isoprene, chloroprene and 1, 3-pentadiene. Examples of actual liquid rubber compounds which can be used advantageously in the present invention include $\alpha, \omega$-1, 2-polybutadiene glycol (Nisso PB-G series produced by Nippon Soda, Inc.), $\alpha, \omega$-1, 2-polybutadiene dicarboxylic acid (Nisso PB-C series produced by Nippon Soda, Inc.), $\alpha, \omega$-1, 2-polybutadiene glycol mono-malate (Nisso PB-GM series produced by Nippon Soda, Inc.), end carboxyl modified 1, 4-polybutadiene (Hycar CTB series produced by Ube Kosan, Inc. or B.F. Goodrich, Inc.), end hydroxyl modified 1, 4-polybutadiene (Poly-bd R-45M or R-45HT produced by Idemitsu Sekiyu Kagaku, Inc. or Arco Chemical, Inc.) and those compounds obtained by either partially or wholly hydrogenating the aforementioned compounds such as hydrogenated $\alpha, \omega$-1, 2-polybutadiene glycol (Nisso PB-GI series produced by Nippon Soda, Inc.) and hydrogenated $\alpha, \omega$-1, 2-polybutadiene dicarboxylic acid (Nisso PB-CI series produced by Nippon Soda, Inc.). Also acceptable are compounds obtained by hydroxyalkyl esterification by addition of alkylene oxide to the carboxyl group of carboxy modified liquid rubber compound and compounds obtained by reaction between the epoxy group of epoxy modified liquid rubber compound and water, alcohol or monobasic organic acid to open the ring of the epoxy group.

An idea which is basic to the present invention is to use block copolymers, with polyester segments and a liquid rubber compound segment, in order to improve compatibility and/or dispersibility of liquid rubber compounds with thermosetting unsaturated polyester resins while retaining the original characteristics of these liquid rubber compounds. The polyester segments in the block copolymers can therefore be selected appropriately in view of the type of thermosetting unsaturated polyester resin with which its use is envisaged. In general, poly-(propylene glycol phthalate), poly-(ethylene glycol phthalate-succinate) and poly-(butylene glycol succinate) are considered for polyester segments because they are compatible and dispersible with relatively many kinds of thermosetting unsaturated polyester resins. In some situations, it is effective to include unsaturated groups based on $\alpha, \beta$-ethylene-type unsaturated dicarboxylic acid within the polyester segments.

The aforementioned block copolymers of the present invention can be obtained stably in an industrially advantageous manner by starting with a liquid rubber compound having within its molecule one or more hydroxyl groups or carboxyl groups and causing it to react alternately with an organic dicarboxylic anhydride and 1, 2-epoxide in the presence of a catalyst, thereby forming polyester chains by condensation using the hydroxyl groups or carboxyl groups of the liquid rubber compound.

Examples of organic dicarboxylic anhydrides which can be used in the aforementioned examples of production processes include aliphatic dicarboxylic anhydrides such as succinic anhydride, maleic anhydride and alkenyl succinic anhydrides, aromatic dicarboxylic anhydrides such as phthalic anhydride and naphthalene dicarboxylic anhydride and alicyclic dicarboxylic anhydrides such as cyclohexane dicarboxylic anhydride, cyclohexene dicarboxylic anhydride and end methylene cyclohexene dicarboxylic anhydride. Examples of 1, 2-epoxides in the same examples of production processes include ethylene oxide, propylene oxide and 1, 2-butylene oxide. Examples of catalysts in still the same examples of production processes include lithium halides such as lithium chloride and lithium bromide and tetra-alkyl quaternary ammonium salts such as tetramethyl ammonium bromide, tributylmethyl ammonium bromide and tetrapropyl ammonium chloride.

Tests on compatibility and dispersibility of the block copolymers with thermosetting unsaturated polyester resins will be described below. If compatibility and/or dispersibility is not completely satisfactory, greater compatibility and/or dispersibility can often be attained by making the end groups of the polyester segment chains in the form of carboxylic acid and adding magnesium oxide, magnesium hydroxide or the like as a thickener.

If the end groups of the polyester segment chains are in the form of hydroxyl groups, a diisocyanate such as methylene-di(4-phenyl isocyanate) may be used to make up some of the insufficiency in compatibility and/or dispersibility.

The ratio of polyester segments contained in the block copolymer also contributes to compatibility and dispersibility with thermosetting unsaturated polyester resins. In general, compatibility and dispersibility increase if the ratio of polyester segments in the block copolymer is made higher. They decrease if the said ratio is made lower.

If improvement of the impact strength and surface characteristics of the molded products is desired, it is preferable to select polybutadiene or a polybutadiene-type compound, with a copolymerisation ratio of other monomers as low as possible, as the liquid rubber compound in the block copolyer. In such a situation, the ratio of polyester segments within the copolymer should be made as low as possible consistent with adequate compatibility and dispersibility into the thermosetting unsaturated polyester resins. If on the other hand improvement of the thermal strength of the molded products, or lowering of the temperature-dependence of the shear and tensile strength while maintaining their surface characteristics, is more desirable, the ratio of polyester segments within the block copolymer should preferably be increased somewhat or unsaturated groups should additionally be mixed within the polyester segments. In general, the ratio of polyester segments within the block copolymer of the present invention should preferably be between 10 and 60 weight %.

The block copolymers of the present invention are generally used by making a 25-40% solution in a polymerizable monomer (such as styrene monomer) and mixing this solution in an amount of 20-50% with respect to thermosetting unsaturated polyester resins. Depending on the kind of block copolymer, however, this step of preparing a solution in a polymerizable monomer such as styrene monomer may be omitted before the block copolymer is added to thermosetting unsaturated polyester resins. In such a situation, an appropriate amount of polymerizable monomers may if desired be added to the thermosetting unsaturated polyester resins before the block copolymer is added.

Examples of thermosetting unsaturated polyester resins which may be advantageously used in the present invention include not only condensation-type polyesters between $\alpha$, $\beta$-ethylene-type unsaturated dicarboxylic acid and glycols, and the modified unsaturated polyesters obtained by adding conjugate diene-type compounds to the unsaturated groups in these condensation-type polyesters, but also novolac-type unsaturated polyesters and vinyl-type unsaturated polyesters. The type of thermosetting unsaturated resins to be used, however, is not intended to limit the broad scope of the present invention.

Polymerizable monomers such as styrene, methacrylates and diallyl phthalate may be considered as solvents for these resins. Styrene is usually used for this purpose. Those with the solid component adjusted to 60-65% are easy to use.

As explained above, styrene monomer is usually used as a solvent in the compositions used for carrying out the molding process but it may be replaced either wholly or partially by chlorostyrene monomer in order to make the molded products less flammable. In order to increase weather resistance of the molded products or to improve their surface lustre, a part of the styrene monomer may be replaced by methyl methacrylate. In addition to the above, many different kinds of polymerizable monomers can be included in the molding composition, depended upon the objects to be attained.

The simplest compositions embodying the present invention are mixtures of the aforementioned block copolymer and thermosetting unsaturated polyester resins. If the matched die method, the resin injection method (the RIM method), the hand lay-up method or the filament winding method is to be used for the molding, a small amount of hardening catalyst or mold releasing agent may be appropriately added to such a simple composition. In such a situation, one or more known high-molecular-weight compounds may also be added, if necessary. In addition to these so-called resins, premixed molding compositions such as SMC and BMC may contain for example calcium carbonate, as a filler, oxides or hydroxides of alkaline earth metals and di-isocyanates or other thickener if necessary, metallic soap or other mold releasing agent and glass fibers or other reinforcing fibres. The mixing ratios and methods are not different from the case of known compositions.

Examples of block copolymers will now be described in order to more clearly explain the present invention. The present invention is not intended to be limited by these examples, and any modifications and variations based on the fundamental idea of the present invention as described above and claimed hereinafter are intended to be included within the scope of this invention.

Examples

Production: Example No. 1

Placed inside an autoclave were 52.3g (0.35 moles) of phthalic anhydride, 82.5g (0.825 moles) of succinic anhydride, and as catalysts 0.7g of lithium chloride and 715g (0.5 moles) of $\alpha$, $\omega$-1, 2-polybutadiene glycol (Nisso PB-G1000 with average molecular weight of 1430 produced by Nippon Soda, Inc.). After nitrogen gas was introduced into the reacting system, it was heated to 130°C with stirring. Next, 42.7g (0.74 moles) of propylene oxide was introduced over a period of one hour. After two hours of aging at 130°C, the reaction was completed and 890g of a yellowish transparent viscous liquid product was obtained. The molecular weight of this polybutadine-polyester block copolymer thus obtained was 1786 (hereinafter always the calculated value) and the ratio of polyester segment was 20.0 weight % (hereinafter written simply "%"). Its acid value was 27 and its hydroxyl value was 38.

Production: Example No. 2

Placed inside a flask were 800g (0.448 moles) of the block copolymer obtained in Example No. 1 and 54.2g (0.54 moles) of succinic anhydride for a reaction at 120-125°C in a nitrogen gas flow for a period of two hours. After the contents were cooled to 50°C, 214 g of styrene monomer was added to prepare a styrene solution containing 80 weight % of block copolymer. The acid value of this styrene solution containing the block copolymer was 50.7 and its hydroxyl value was 1.9. Polybutadiene-polyester block copolymer with carboxyl modified ends of polyester chains was obtained.

Production: Example No. 3

Placed inside an autoclave were 130.2g (1.3 moles) of succinic anhydride, 105.2g (0.71 moles) of phthalic anhydride, 35.8g (0.365 moles) of maleic anhydride, 1430g (1 mole) of $\alpha$, $\omega$-1, 2-polybutadiene glycol (as used in Example No.1) and 0.6g of lithium chloride. After nitrogen gas was introduced into the reacting system, it was heated to 103°C with stirring. Next, 86.3g (1.49 moles) of propylene oxide was introduced over a period of 40 minutes at 125-130°C. The reaction was completed after two hours of aging at this temperature to obtain polybutadiene-polyester block copolymer. After this was cooled, 447g of styrene monomer was added to dissolve and dilute it and a styrene solution containing 80 weight % of the aforementioned block copolymer was prepared. The molecular weight of the polybutadiene-polyester block copolymer thus obtained was 1787 and the ratio of polyester segments was 20%. The acid value of its styrene solution was 25.6 and its hydroxyl value was 26.3.

Test No. 1

Use was made of 33% styrene solutions of the block copolymers obtained in Examples Nos. 1 and 2 to test compatibility and/or dispersibility with the following thermosetting unsaturated polyester resins: Yupika 7507 (produced by Nippon Yupika, Inc.), Polyset 9120, Polyset 9107, Polyset 2212 and Polyset 6200 (the last four produced by Hitachi Kasei, Inc.). Phase separation of about 10% was observed in 24 hours only in the combination of the block copolymer of Example No. 2 and Polyset 9107. With the other combinations, no phase separation was observed even without a thickener.

Accordingly, it was anticipated that molded products with uniform surface lustre would be obtainable by many molding methods if aforementioned combinations were used. Thus, for each of the two kinds of block polymers, a liquid with 40 parts of 33% styrene solution, 60 parts of Yupika 7507, 1.5 parts of tertiary butyl perbenzoate and 3.0 parts of zinc stearate was prepared inside a Banbury mixer into which 200 parts of calcium carbonate powder were added and after the mixture became uniform, 60 parts of glass fibers of 1/2 inch (1.27 cm) in length were added. One minute later, the mixer was stopped and a premix was obtained. These premixes are based on the compositions of the present invention. Products formed therefrom at mold temperature of 145 °C were found to have uniform surface luster. The molding shrinkage was 0.004% when use was made of the block copolymer of Example No.1 and 0.005% with the block copolymer of Example No.2.

The premixture which is obtainable in the same way as described above except $\alpha$, $\omega$-1, 2-polybutadiene glycol (described in Example No.1) is substituted for the block copolymer is a known composition but the surface of its molded products was full of spots and cosmetically much inferior.

Test No. 2

A 33% styrene solution of the block copolymer obtained in Example No.3 was prepared. Uniformly mixed with 40 parts of this solution were 60 parts of Polyset 9120, 3 parts of zinc stearate, 1.5 parts of tertiary butyl perbenzoate, 140 parts of calcium carbonate powder and 0.3 parts of parabenzoquinone, and 2 parts of magnesium oxide was subsequently added to immediately produce a composition for SMC containing glass fibers of 1 inch (2.54 cm) in length. This composition which embodies the present invention was used to produce molded products with mold temperature of 140°C. Although some cloudiness was observed on the surface, the surface lustre was generally uniform and the molding shrinkage was 0.06%.

For comparison, use was made of a known composition for SMC obtained by the same method as described above except the block copolymer was substituted by $\alpha$, $\omega$-1, 2-polybutadiene glycol (described in Example No.1). The surface of its molded products was full of lustre spots and running designs were also observable. The molding shrinkage was -0.20%. In this situation, the dope stability was poor before the addition of magnesium oxide and phase separation was clearly observable. In this respect, too, it was clear that its industrial application is extremely difficult.

Test No. 3

Added into 500 parts each of 33% styrene solutions of the two block copolymers obtained in Examples Nos. 1 and 2 were 500 parts of Polylight PC-670 (produced by Dai Nippon Ink, Inc.) as thermosetting unsaturated polyester resin. Into this were dissolved 60 parts of cobalt naphthenate to obtain a liquid with viscosity of 830 centipoise (0.83 Pas). As this liquid was directed into a resin injection mold (called RIM or RTM) with a glass mat, acetyl aceton peroxide was introduced into the mold by a pump such that its ratio in the mixture would be 1%. The liquid inlet of the mold had a diameter of 20mm and the mold temperature at the time was 25°C. The mold temperature began to rise two hours later because of the heat of polymerization and a maximum temperature of 70°C was reached three hours later. The mold was opened three hours still later to take out the product. The product had a uniform exterior and there were no lustre spots. The surface was much smoother than that of a comparison product obtained in the same manner as described above except the block copolymer was not used. No glass fibers were observable from outside.

Production: Example No. 4

Placed inside an autoclave were 52.3g (0.35 moles) of phthalic anhydride, 82.5g (0.825 moles) of succinic anhydride, 0.7g of lithium chloride as catalyst and 700g (0.5 moles) of hydrogenated α, ω-1, 2-polybutadiene glycol (Nisso PB-GI1000 with average molecular weight of 1400 and iodine value of 6, produced by Nippon Soda, Inc.) and after nitrogen gas was introduced into the reacting system, the mixture was heated to 130°C with stirring. Next, 42.7g (0.74 moles) of propylene oxide was introduced over a period of one hour. After two hours of aging at 130°C, the reaction was completed to obtain 875g of a yellowish transparent viscous liquid product. The molecular weight of the hydrogenated polybutadiene-polyester block copolymer thus obtained was 1755. The ratio of polyester segments was 20.2 weight %, its acid value was 28 and its hydroxyl value was 39.

Production: Example No. 5

Placed inside a flask were 786g (0.448 moles) of the block copolymer obtained in Example No. 4 and 54.2g (0.54 moles) of succinic anhydride for a reaction at 120-125°C in a nitrogen gas flow for a period of two hours. After the contents were cooled to 50°C, 210g of styrene monomer was added to prepare a styrene solution containing 80 weigth % of block copolymer. The acid value of this styrene solution containing block copolymer was 51.5 and its hydroxyl value was 0.8. Hydrogenated polybutadiene-polyester block copolymer with carboxyl modified ends of polyester chains was thus obtained.

Production: Example No. 6

Placed inside an autoclave were 130.2g (1.3 moles) of succinic anhydride, 105.2g (0.71 moles) of phthalic anhydride, 35.8g (0.365 moles) of maleic anhydride, 1400g (1 mole) of hydrogenated α, ω-1, 2-polybutadiene glycol (as used in Example No. 4) and 0.6g of lithium chloride and after nitrogen gas was introduced into the system, the mixture was heated to 130°C with stirring. Next, 86.3g (1.49 moles) of propylene oxide was introduced in over a period of 40 minutes at 125-130°C. After two hours of aging at this temperature, the reaction was terminated to obtain hydrogenated polybutadiene-polyester block copolymer. After this was cooled, it was dissolved and diluted by adding 439g of styrene monomer and a styrene solution containing 80 weight % of the aforementioned styrene solution was obtained. The molecular weight of the hydrogenated polybutadiene-polyester block copolymer thus obtained is 1758. The ratio of polyester segments was 20.4%. The acid value of its styrene solution was 26.0 and its hydroxyl value was 26.7.

Test No. 4

Use was made of 33% styrene solutions of the block copolymer obtained in Exaples Nos. 4 and 5 to test compatibility and/or dispersibility with the following thermosetting unsaturated polyester resins: Yupika 7507 (produced by Nippon Yupika, Inc.), Polyset 9120, Polyset 9107, Polyset 2212 and Polyset 6200 (the last four produced by Hitachi Kasei, Inc.). Phase separation of about 10% was observed in 24 hours only in the combination of the block copolymer of Example No. 6 and Polyset 8107. With the other combinations, no phase separation was observed even without a thickener.

Accordingly, it was anticipated that molded products with uniform surface lustre would be obtainable by many molding methods if aforementioned combinations were used. Thus, for each of the two kinds of block polymers, a liquid with 40 parts of 33% styrene solution, 60 parts of Yupika 7507, 1.5 parts of tertiary butyl perbenzoate and 3.0 parts of zinc stearate was prepared inside a Banbury mixer into which 200 parts of calcium carbonate powder were added and after the mixture became uniform, 60 parts of glass fibers of 1/2 inch (1.27 cm) in length were added. One minute later, the mixer was stopped and a premix was obtained. These premixes are based on the compositions of the present invention. Products formed therefrom at mold temperature of 140°C were found to have uniform surface luster. The molding shrinkage was less than 0.004% when use was made of the block copolymer of Example No. 4 and less than 0.005% with the block copolymer of Example No. 5.

The premixture which is obtainable in the same way as described above except hydrogenated $\alpha$, $\omega$-1, 2-polybutadiene glycol (as described in Example No. 4) is substituted for the block copolymer is a known composition but the surface of its molded products was full of spots and cosmetically much inferior.

Test No. 5

A 33% styrene solution of the block copolymer obtained in Example No. 6 was prepared. Uniformly mixed with 40 parts of this solution were 60 parts of Polyset 9120, 3 parts of zinc stearate, 1.5 parts of tertiary butyl perbenzoate, 140 parts of calcium carbonate powder and 0.3 parts of parabenzoquinone, and 2 parts of magnesium oxide was subsequently added to immediately produce an SMC containing glass fibers of 1 inch (2.54 cm) in length. This composition which embodies the present invention was used to produce molded products with mold temperature of 140°C. Although some cloudiness was observed on the surface, the surface lustre was generally uniform and the molding shrinkage was 0.05%.

For comparison, use was made of an SMC obtained by the same method as described above except the block copolymer was substituted by hydrogenated $\alpha$, $\omega$-1, 2-polybutadiene glycol (as used in Example No. 4). The surface of its molded product was full of lustre spots and running designs were also observable. The molding shrinkage was -0.25%. In this situation, the dope stability was poor before the addition of magnesium oxide and phase separation was clearly observable. In this respect, too, it was clear that its industrial application is extremely difficult.

Test No. 6

Added into 500 parts each of 33% styrene solutions of the two block copolymers obtained in Examples Nos. 4 and 5 were 500 parts of Polylight PC-670 (produced by Dai Nippon Ink, Inc.) as thermosetting unsaturated polyester resin. Into this were dissolved 60 parts of cobalt naphthenate to obtain a liquid visocity of 830 centipoise (0.83 Pas). As this liquid was directed into a resin injection mold (called RIM or RTM) with a glass mat, acetyl aceton peroxide was introduced into the mold by a pump such that its ratio in the mixture would be 1%. The liquid inlet of the mold had a diameter of 20mm and the mold temperature at the time was 25°C. The mold temperature began to rise two hours later because of the heat of polymerization and a maximum temperature of 70°C was reached three hours still later. The mold was opened still three hours later to take out the product. The product had a uniform exterior and there were no lustre spots. The surface was much smoother than that of a comparison product obtained in the same manner as described above except the block copolymer was not used. No glass fibers were observable from outside..

**Claims**

1. A hardenable unsaturated polyester resin composition comprising, together with the unsaturated polyester at least one block copolymer having both polyester parts and a liquid rubber compound part as constituent segments thereof, wherein said block copolymer is formed by the ultimate condensation of carboxyl groups or hydroxyl groups in said liquid rubber compound with at least one organic dicarboxylic anhydride and at least one 1,2-epoxide in the presence of a catalyst.

2. The composition as claimed in claim 1 wherein said liquid rubber compound part of the block copolymer comprises:

   i $\alpha$, $\omega$-1, 2-polybutadiene glycol, $\alpha$, $\omega$-1, 2-polybutadiene dicarboxylic acid, $\alpha$, $\omega$-1, 2-polybutadiene glycol mono-malate, end-carboxyl modified 1, 4-polybutadiene, or end-hydroxyl modified 1,4-polybutadiene; or

   ii compounds obtained by either partially or wholly hydrogenating the aforementioned compounds; or

   iii compounds obtained by hydroxyalkyl esterification by addition of alkylene oxide to the carboxyl group of carboxy modified liquid rubber compound; or

iv compounds obtained by reaction between the epoxy group of epoxy modified liquid rubber compound and water, alcohol or monovalent organic acid to open the ring of the epoxy group.

3. The composition as claimed in one preceding claim wherein said polyester parts of the block copolymer is 10-60 weight percentage of said block copolymer.

4. The composition as claimed in any one preceding claim wherein said organic dicarboxylic anhydride component is or includes one or more anhydrides selected from phthalic anhydride, succinic anhydride, maleic anhydride, cyclohexane dicarboxylic anhydrides, cyclohexene dicarboxylic anhydrides and end methylene cyclohexane dicarboxylic anhydrides.

5. The composition as claimed in any one preceding claim wherein said 1, 2-epoxide component is or includes one or more epoxides selected from ethylene oxide, propylene oxide and 1,2-butylene oxide.

6. The composition as claimed in any one preceding claim in which the polyester parts of the block copolymer are chosen from poly-(propylene glycol phthalate), poly-(ethylene glycol phthalate-succinate) and poly-(butylene glycol succinate).

7. The composition as claimed in any one preceding claim wherein said unsaturated polyester is or includes one or more polymers selected from $\alpha,\beta$-ethylene-type unsaturated polyesters, novolac-type unsaturated polyesters and vinyl ester-type unsaturated polyesters.

8. The composition as claimed in any one preceding claim for use as a sheet molding compound or a bulk molding compound, comprising at least one polymerizable monomers, a filler, a hardening catalyst, a mold releasing agent and reinforcing fibres.

9. The composition as claimed in claim 8 further comprising a thickener.

10. A molded article made from the composition as claimed in claim 8 or 9.

**Revendications**

1. Composition de résine à base de polyester insaturé durcissable comprenant, ensemble avec le polyester insaturé, au moins un copolymère bloc ayant à la fois des parties polyesters et un composé de caoutchouc liquide comme segments constitutifs de cette résine, dans laquelle ledit copolymère bloc est formé par la condensation alternée des groupements carboxyliques ou des groupements hydroxy dans ledit composé de caoutchouc liquide avec au moins un anhydride dicarboxylique organique et au moins un 1,2-époxyde en présence d'un catalyseur.

2. Composition telle que revendiquée dans la revendication 1, dans laquelle la partie composée de caoutchouc liquide du copolymère bloc comprend:

   i un $\alpha,\omega$-1,2-polybutadiène glycol, un acide $\alpha,\omega$-1,2-polybutadiène dicarboxylique, un mono-malate de $\alpha,\omega$-1,2-polybutadiène glycol, un 1,4-polybutadiène modifié par un groupement carboxylique terminal ou un 1,4-polybutadiène modifié par un groupement hydroxy terminal ou

   ii des composés obtenus par une hydrogénation partielle ou complète des composés mentionnés plus haut ou

   iii des composés obtenus par estérification hydroxyalkylique par addition d'un oxyde d'alkylène au groupement carboxylique du composé de caoutchouc liquide modifié par un groupement carboxylique ou

   iv des composés obtenus par réaction entre le groupement époxy du composé de caoutchouc liquide modifié par un époxy et de l'eau, un alcool ou un acide organique monovalent pour ouvrir le noyau du groupement époxy.

3. Composition telle que revendiquée dans une revendication précédente, dans laquelle lesdites parties polyesters du copolymère bloc sont de 10 à 60% en poids dudit copolymère bloc.

4. Composition telle que revendiquée dans l'une quelconque des revendications précédentes, dans laquelle ledit composant anhydride dicarboxylique organique est ou comprend un ou plusieurs anhydrides choisis parmi l'anhydride phtalique, l'anhydride succinique, l'anhydride maléique, les anhydrides cyclohexane dicarboxyliques, les anhydrides cyclohexène dicarboxyliques et les anhydrides cyclohexane dicarboxyliques avec un méthylène terminal.

5. Composition telle que revendiquée dans l'une quelconque des revendications précédentes, dans laquelle ledit composant 1,2-époxyde est ou comprend un ou plusieurs époxydes choisis parmi l'oxyde d'éthylène, l'oxyde de propylène et l'oxyde de 1,2-butylène.

6. Composition telle que revendiquée dans l'une quelconque des revendications précédentes, dans laquelle les parties polyesters du copolymère bloc sont choisies parmi le poly-(phthalate de propylène glycol), poly-(phthalate-succinate d'éthylène glycol) et le poly-(succinate de butylène glycol).

7. Composition telle que revendiquée dans l'une quelconque des revendications précédentes, dans laquelle le polyester insaturé est ou comprend un ou plusieurs polymères choisis parmi les polyesters insaturés du type $\alpha,\beta$-éthylénique, les polyesters insaturés du type novolac et les polyesters insaturés du type ester vinylique.

8. Composition telle que revendiquée dans l'une quelconque des revendications précédentes pour une utilisation comme mat imprégné de résine ou comme composé de remplissage pour moulage, un catalyseur de durcissement, un lubrifiant de moule et des fibres de renforcement.

9. Composition telle que revendiquée dans la revendications 8 qui comprend, en outre, un épaississeur.

10. Un objet moulé fabriqué au départ de la composition telle que revendiquée dans la revendication 8 ou 9.

**Patentansprüche**

1. Eine härtbare, ungesättigte Harzmischung, die zusammen mit einem ungesättigten Polyester zumindest ein Block-Copolymeres aufweist, das sowohl Polyesteranteile als auch Anteile einer flüssigen Gummiverbindung als konstituierende Segmente hat, wobei das Blockpolymere gebildet ist durch elementare Kondensation von Carboxyl- oder Hydroxylgruppen in der genannten flüssigen Gummiverbindung mit zumindest eine organischen Dicarboxylanhydrid und zumindest einem 1,2-Epoxid in Anwesenheit eines Katalysators.

2. Die Harzmischung wie in Anspruch 1 beansprucht, wobei die genannte flüssige Gummiverbindung, die Teil des Block-Copolymeren ist, aufweist:

i $\alpha,\omega$-1, 2-Polybutadien Glycol, $\alpha,\omega$-1, 2-Polybutadien Dicarboxylsäure, $\alpha,\omega$-1, 2-Polybutadien Glycol Mono-Malat, End-Carboxyl modifziertes 1,4-Polybutadien oder End-Hydroxal modifiziertes 1,4-Polybutadien; oder

ii Verbindungen, die durch entweder teilweise oder vollständige Hydrierung der vorgenannten Verbindungen erhalten wurden; oder

iii Verbindungen, die durch hydroxylalkalische Veresterung durch Anlagern von Alkylenoxid an die Dicarboxylgruppe von einer Carboxyl-modifizierten flüssigen Gummiverbindung erhalten sind; oder

iv Verbindungen, die erhalten wurden durch Reaktion zwischen der Epoxid-Gruppe von Epoxid-modifizierter flüssiger Gummiverbindung und Wasser, Alkohol, oder einer monovalenten organischen Säure, um den Ring der Epoxid-Gruppe zu öffnen.

3. Die Harzmischung wie in einem der vorangegangenen Ansprüche beansprucht, wobei die Polyesteranteile des Block-Copolymeren 10 bis 60 Gewichtsprozent des Block-Copolymeren betragen.

4. Die Harzmischung wie in einem der vorangegangenen Ansprüche beansprucht, wobei die genannte, organische Dicarboxyl-Anhydrid-Komponente gebildet ist durch oder aufweist eine oder mehrere Anhydride ausgewählt aus Phthalanhydrid, Succinanhydrid, Maleinanhydrid, Cyclohexandicarboxylanhydrid, Cyclohexendicarboxylanhydrid und End-Methylencyclohexan-Dicarboxylanhydrid.

5. Die Harzmischung wie in einem der vorangegangenen Ansprüche beansprucht, wobei die genannte 1, 2-Epoxid-Komponente gebildet ist durch oder aufweist mindestens ein Epoxid, das ausgewählt ist aus Ethylenoxid, Propylenoxid und 1,2-Butylenoxid.

6. Die Harzmischung wie in einem der vorangegangenen Ansprüche beansprucht, in der die Polyesteranteile des Blockcopolymeren ausgewählt sind aus Poly-(Propylenglycolphthalat), Poly-(Ethylenglycolphtalat-Succinat) und Poly-(Butylenglycolsuccinat).

7. Die Harzmischung wie in einem der vorhergehenden Ansprüche beansprucht, wobei das ungesättigte Polyester gebildet ist oder aufweist mindestens ein Polymeres, das ausgewählt ist aus α, β-Ethylen-Typ ungesättigten Polyestern, Novolac-Typ ungesättigten Polyestern und Vinylester-Typ gesättigten Polyestern.

8. Die Harzmischung wie in einem der vorangegangenen Ansprüche beansprucht für die Verwendung als eine Blatt- oder Massenpreßmischung, die zumindest ein polymerisierbares Monomeres, einen Füller, einen härtenden Katalysator, ein Formtrennmittel und verstärkende Fasern aufweist.

9. Die Harzmischung wie in Anspruch 8 beansprucht, die weiterhin einen Verdicker aufweist.

10. Ein im Gießverfahren hergestellter Artikel erstellt mit der Harzmischung nach Anspruch 8 oder 9.